(19) Europäisches Patentamt

European Patent Office

Office européen des brevets

(11) **EP 2 983 415 A1**

(12) **EUROPEAN PATENT APPLICATION**

(43) Date of publication:
10.02.2016 Bulletin 2016/06

(51) Int Cl.:
*H04W 48/20* (2009.01)     *H04W 48/02* (2009.01)

(21) Application number: 15168618.5

(22) Date of filing: 21.05.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 24.07.2014 US 201462028792 P
18.12.2014 TW 103144371

(71) Applicant: **Acer Incorporated**
**New Taipei City 221 (TW)**

(72) Inventor: **Ye, Shiang-Rung**
**221 New Taipei City (TW)**

(74) Representative: **Straus, Alexander**
**Patentanwälte**
**Becker, Kurig, Straus**
**Bavariastrasse 7**
**80336 München (DE)**

(54) **METHOD OF PERFORMING CELL SELECTION PROCEDURE IN WIRELESS COMMUNICATION SYSTEM**

(57) If a serving cell which the user equipment is currently camping on is barred from cell selection/reselection by the network, the user equipment is configured to search a suitable cell and/or an acceptable cell. Therefore, the user equipment can camp on another suitable cell or another acceptable cell more easily, thereby improving communication quality.

FIG. 1

**Description**

Field of the Invention

The present invention is related to a method of performing cell selection procedure in a wireless communication system when a serving cell becomes barred.

Background of the Invention

The 3rd Generation Partnership Project (3GPP) has developed various wireless communication networks. A universal mobile telecommunications system (UMTS) or a global system for mobile communications edge radio access network (GERAN)is a $3^{rd}$ generation (3G) network which adopts a wideband code division multiple access (WCDMA) technology capable of providing high frequency spectrum utilization, universal coverage, and high-speed/quality multimedia data transmission. In the UMTS network, a radio access network known as a universal terrestrial radio access network (UTRAN) includes multiple cells, commonly known as Node-Bs (NBs), for communicating with multiple user equipment (UE). A long-term evolution (LTE) system is a $4^{th}$ generation (4G) network which includes a new radio interface and radio network architecture capable of providing a high data rate, low latency, packet optimization, and improved system capacity and coverage. In the LTE network, a radio access network known as an evolved UTRAN (E-UTRAN) includes multiple evolved NBs (eNBs) for communicating with multiple UEs and a core network which includes a mobility management entity (MME), a serving gateway and other devices for NAS (Non Access Stratum) control.

According to 3GPP specifications, after selecting a public land mobile network identity (PLMN), the UE may perform a cell selection procedure and a cell reselection procedure in order to use related network services. The cell selection procedure allows the UE to quickly camp on a serving cell, thereby receiving system information from the PLMN, establishing radio resource control (RRC) links, accessing network via control channels, and receiving/replying paging messages. The cell reselection procedure allows the UE to camp on another target cell having better signal quality than the current serving cell.

According to related 3GPP specifications (such as TS 36.304), the cells in a wireless communication system may be categorized as suitable cells, acceptable cells, barred cells or reserved cells according to service limitations. The UE may acquire the types of the cells from the status information of a system information block 3 (SIB3) or a system information block 4 (SIB4). According to related 3GPP specifications (such as TS 36.304), the UE is not allowed to camp on a barred cell or on a reserved cell. Therefore, the cell selection procedure and the cell reselection procedure can only be performed on suitable cells or acceptable cells. However, although a serving cell selected by a specific UE during a previous cell selection procedure was a suitable cell or an acceptable cell, the network may somehow set the serving cell as a barred cell or a reserved cell when the UE is currently camping on the serving cell. After that, all other UEs are forbidden to camp on the barred serving cell of the specific UE. When a serving cell of a UE changes its status from a suitable cell or an acceptable cell to a barred cell or a reserved cell, the corresponding operation of the UE has not be addressed in existing 3GPP specification and the UE may not be able to camp on another suitable cell or acceptable cell target cell by performing the cell selection procedure. Therefore, there is a need for a method of performing cell selection procedure in a wireless communication system when a serving cell becomes barred.

Summary of the Invention

The present invention aims at providing a method of performing cell selection procedure in wireless communication system when a serving cell becomes barred.

This is achieved by a method of performing a cell selection procedure in a wireless communication system which includes a user equipment and a plurality of cells according to claims 1 and 5 and a wireless communication system configured to perform a cell selection procedure according to claims 8. The dependent claims pertain to corresponding further developments and improvements.

As will be seen more clearly from the detailed description following below, the claimed method of performs a cell selection procedure in a wireless communication system which includes a user equipment and a plurality of cells. The method includes the user equipment camping on a specific cell among the plurality of cells; the user equipment evaluating if the plurality of cells includes a suitable cell when camping on the specific cell if it is determined that the specific cell is allowed to be selected in the cell selection procedure or in a cell reselection procedure; and the user equipment camping on the suitable cell if the plurality of cells includes the suitable cell.

As will be seen more clearly from the detailed description following below, the claimed method of performs a cell selection procedure in a wireless communication system which includes a user equipment and a plurality of cells. The method includes the user equipment camping on a specific cell among the plurality of cells; the user equipment evaluating if the plurality of cells includes an acceptable cell when camping on the specific cell if it is determined that the specific cell is allowed to be selected in the cell selection procedure or in a cell reselection procedure; and the user equipment camping on the acceptable cell if the plurality of cells includes the acceptable cell.

Brief Description of the Drawings

In the following, the invention is further illustrated by way of example, taking reference to the accompanying drawings.

FIG. 1 is a flowchart illustrating a method of performing cell selection procedure in a wireless communication system according to an embodiment of the present invention.
FIG. 2 is a flowchart illustrating a method of performing cell selection procedure in a wireless communication system according to another embodiment of the present invention.
FIG. 3 is a state diagram illustrating a method of performing cell selection procedure in a wireless communication system according to an embodiment of the present invention.
FIG. 4 is a state diagram illustrating a method of performing cell selection procedure in a wireless communication system according to another embodiment of the present invention.

Detailed Description

The present method of performing cell selection procedure may be applied to a wireless communication system which includes a UE and a plurality of cells. Each cell may be an NB of a UTRAN, an e-NB of a EUTRAN, or a base station of another type of network. The UE may include any device with telecommunication capabilities, such as mobile phones, personal digital assistants, handheld computers, tablet computers, nettop computers, or laptop computers. However, the types of the cells and the UE do not limit the scope of the present invention.

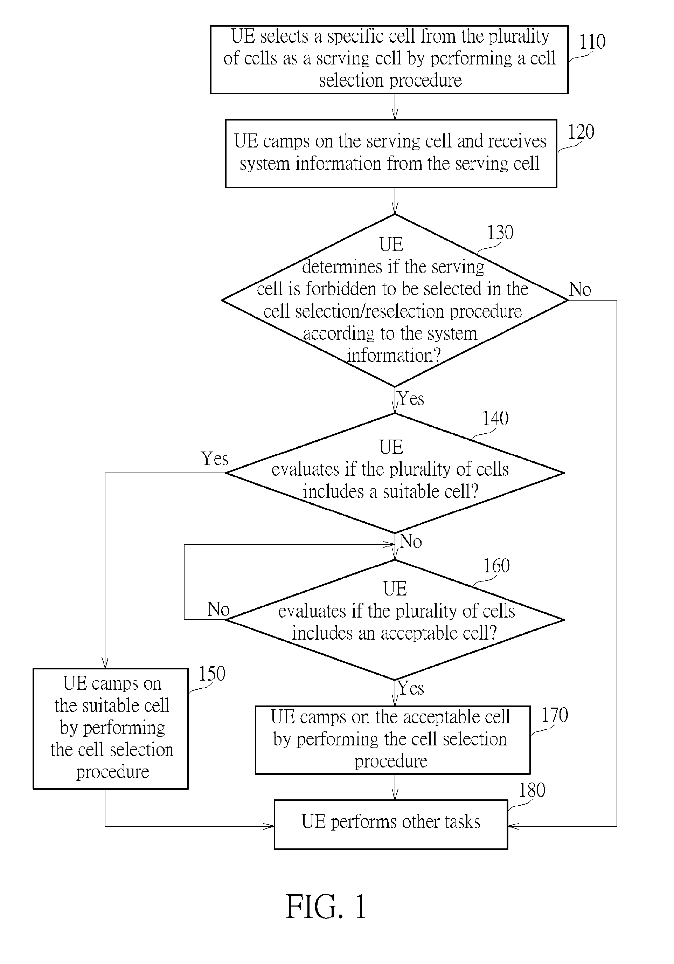

FIG. 1 is a flowchart illustrating a method of performing cell selection procedure in a wireless communication system according to an embodiment of the present invention. The method in FIG. 1 includes the following steps:

Step 110:   the UE selects a specific cell from the plurality of cells as a serving cell by performing a cell selection procedure; execute step 120.
Step 120:   the UE camps on the serving cell and receives system information from the serving cell; execute step 130.
Step 130:   the UE determines if the serving cell is forbidden to be selected in the cell selection procedure or in the cell reselection procedure according to the system information; if yes, execute step 140; if no, execute step 180.
Step 140:   the UE evaluates if the plurality of cells includes a suitable cell; if yes, execute step 150; if no, execute step 160.
Step 150:   the UE camps on the suitable cell by performing the cell selection procedure; execute step 180.
Step 160:   the UE evaluates if the plurality of cells includes an acceptable cell; if yes, execute step 170; if no, execute step 160.
Step 170:   the UE camps on the acceptable cell by performing the cell selection procedure; execute step 180.
Step 180:   the UE performs other tasks.

According to related 3GPP specifications (such as TS 36.304), the cell selection procedure includes two stages: target cell decision and serving cell decision. During the first stage of target cell decision, the UE may select the target cell according its PLMN identification list, stored cell information or the list of scanned neighboring cells. If all scanned neighboring cells are not included in the UE's PLMN identification list or no smart card is inserted, the UE is configured to select the target cell based on signal strength. After selecting the target cell, the UE may start to receive the system information from the target cell and process the system information. The system information may include parameters ($Q_{rxlevmeas}$, $Q_{qualmeas}$, $Q_{rxlevmin}$, $Q_{qualmin}$, $Q_{rxlevminoffset}$, $Q_{qualminoffset}$, $P_{compensation}$) or threshold Values ($Thresh_{Serving, LowQ}$, $Thresh_{Serving, LowP}$, $Thresh_{X, LowQ}$, $Thresh_{X, LowQ}$). Based on these parameters and threshold values, the UE may calculate the parameters of Srxlev and Squal, and acquire corresponding cell selection/reselection criteria. Srxlev represents a cell selection RX level value, and Squal represents a cell selection quality value. $Q_{rxlevmeas}$ represents a measured cell RX level value or a reference signal receiving power (RSRP). $Q_{qualmeas}$ represents a measured cell quality value or a reference signal receiving quality (RSRQ). $Q_{rxlevmin}$ represents a minimum required RX level in the cell. $Q_{qualmin}$ represents a minimum required quality level in the cell. $Q_{rxlevminoffset}$ represents an offset taken into account in the Srxlev evaluation as a result of a periodic search for a higher priority PLMN. $Q_{qualminoffset}$ represents an offset taken into account in the Squal evaluation as a result of a periodic search for a higher priority PLMN. $P_{compensation}$ represents the larger one among ($P_{EMAX}$-$P_{PowerClass}$) and 0, wherein $P_{EMAX}$ represents the maximum transmission power of the UE and $P_{PowerClass}$ represents the maximum radio frequency (RF) output power of the UE. $Thresh_{Serving, LowQ}$ and Thresh$_{Serving, LowP}$ represent low threshold values required for evaluating reselection of the serving frequency. Thresh$_{X, LowQ}$ and Thresh$_{X, LowP}$ represent threshold values required for reselecting low-priority frequency.

The decibel (dB) is the unit of Srxlev and Squal which are represented by the following equations:

$$Srxlev = Q_{rxlevmeas} - (Q_{rxlevmin} + Q_{rxlevminoffset}) - P_{compensation} \quad \ldots(1)$$

$$Squal = Q_{qualmeas} - (Q_{qualmin} + Q_{qualminoffset}) \quad \ldots(2)$$

During the second stage of serving cell decision, the UE may determine if the target cell is a suitable cell based on the cell selection criteria which are included in the system information provided by the target cell. The cell selection criteria include judging conditions associated with signal receiving threshold (such as Srxlev and/or Squal) and status information indicated in the system information. The following equation (3) represents a cell selection criterion S1 used for frequency division duplex (FDD) structure. The following equation (4) represents a cell selection criterion S2 used for time division duplex (TDD) structure.

$$S1: \; Srxlev > 0 \; and \; Squal > 0 \quad \ldots(3) \; \circ$$

$$S2: \; Srxlev > 0 \quad \ldots(4) \; \circ$$

For illustrative purpose, it is assumed that the specific cell is selected in the first stage, the signal strength of the specific cell is determined to be larger than a signal receiving threshold (such as when the cell selection criterion S1 or S2 is satisfied) in the second stage, and the specific cell is allowed to be selected in the cell selection procedure or in the cell reselection procedure according to the status information. Under such circumstance, the UE may select the specific cell as the serving cell in step 110.

In step 120, the UE may camp on the serving cell and receives system information from the serving cell and continuously receive cell reselection criteria, frequency list and status information from the serving cell, thereby performing the evaluation of the cell selection procedure accordingly.

As previously illustrated, although the UE is allowed to select the specific cell as the serving cell in step 110, the network may somehow change the status information of the specific cell while the UE is camping on the specific cell. For example, the status information indicated in SIB3 or SIB4 broadcast by the specific cell includes information elements (IE) of "cell barred", "cell reserved for operator use" and "cell reservation on extension". The IE type of "cell barred" may be set in a "barred" state or a " not barred" state. The IE type of "cell reserved for operator use" and "cell reservation on extension" may be set in a "reserved" state or in a "not reserved" state. If the network allows the specific cell to provide normal service, the above-mentioned IEs may be set in the "not barred" state or in the "not reserved" state; if the network does not want any UE to camp on the specific cell, the above-mentioned IEs may be set in the "barred" state or in the "reserved" state.

If the UE determines that the serving cell is not forbidden to be selected in the cell selection procedure or in the cell reselection procedure according to the system information in step 130, step 180 is then executed so that the UE may perform other tasks, such as performing a cell selection evaluation or a cell reselection evaluation defined in related 3GPP specifications. If the UE determines that the serving cell is forbidden to be selected in the cell selection procedure or in the cell reselection procedure according to the system information in step 130, step 140 is then executed.

As previously illustrated, the cells in a wireless communication system may be categorized as suitable cells, acceptable cells, barred cells or reserved cells according to service limitations. When camping on a suitable cell, a UE inserted with a smartcard may receive normal services. When camping on an acceptable cell, a UE inserted with a smartcard may only receive restricted services. It is not allowed to camp on a barred cell or a reserved cell. In step 140, the UE may evaluate if the plurality of cells includes a suitable cell.

According to 3GPP specifications, the UE may use two types of cell selection evaluation: initial cell selection evaluation or stored information cell selection evaluation. The initial cell selection evaluation requires no prior knowledge of which RF channels are UTRA carriers. The UE may scan all RF channels in the UTRA bands according to its capabilities to find a suitable cell. On each carrier, the UE only search for the strongest cell. Once a suitable cell is found in the initial cell selection evaluation, this suitable cell shall be selected. On the other hand, the stored information cell selection evaluation requires stored information of carrier frequencies and optionally also information on cell parameters from previously received measurement control information elements. Once a suitable cell is found in the stored information cell selection evaluation, this suitable cell shall be selected; if no suitable cell is found in the stored information cell selection evaluation, the initial cell selection evaluation may be started.

In an embodiment, the UE may evaluate if the plurality of cells includes a suitable cell by performing an initial cell selection evaluation or a stored information cell selection evaluation in step 140. In another embodiment, the UE may evaluate if the plurality of cells includes a suitable cell by sequentially performing a stored information cell selection evaluation and an initial cell selection evaluation in step 140.

If the suitable cell can be found in step 140, the UE may camp on the suitable cell by performing the cell selection procedure in step 150. Step 180 may then be executed so that the UE may perform other tasks, such as performing a cell selection evaluation or a cell reselection evaluation defined in related 3GPP specifications.

If no suitable cell can be found in step 140, the UE may evaluate if the plurality of cells includes an acceptable cell in step 160. In an embodiment, an initial cell selection evaluation or a stored information cell selection evaluation may be used for searching the acceptable cell in step 160.

If the acceptable cell can be found in step 160, the UE may camp on the acceptable cell by performing the cell selection procedure in step 170. Step 180 may then be executed so that the UE may perform other tasks, such as performing a cell selection evaluation or a cell reselection evaluation defined in related 3GPP specifications.

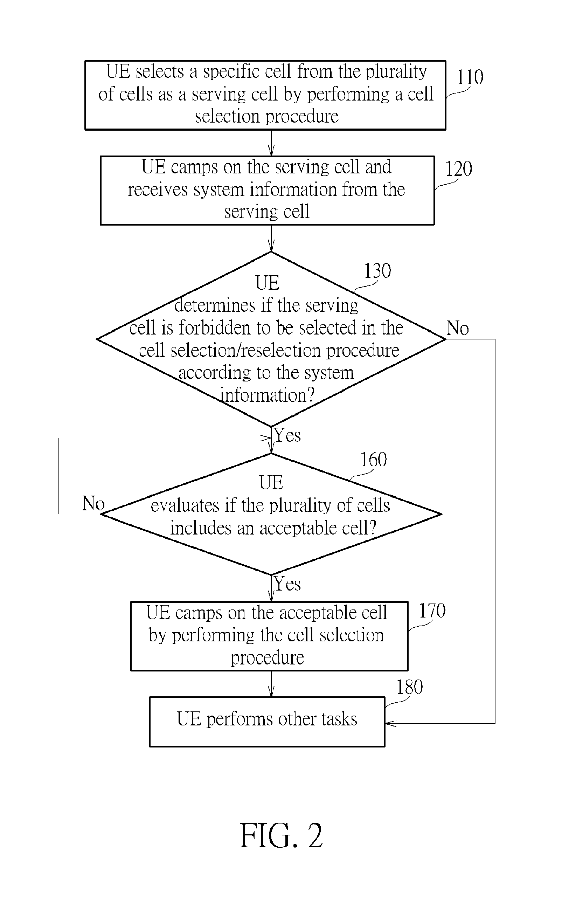

FIG. 2 is a flowchart illustrating a method of performing cell selection procedure in a wireless communication system according to another embodiment of the present invention. The method in FIG. 2 includes the following steps:

Step 110: the UE selects a specific cell from the plurality of cells as a serving cell by performing a cell selection procedure; execute step 120.

Step 120: the UE camps on the serving cell and receives system information from the serving cell; execute step 130.

Step 130: the UE determines if the serving cell is forbidden to be selected in the cell selection procedure or in the cell reselection procedure according to the system information; if yes, execute step 160; if no, execute step 180.

Step 160: the UE evaluates if the plurality of cells includes an acceptable cell; if yes, execute step 170; if no, execute step 160.

Step 170: the UE camps on the acceptable cell by performing the cell selection procedure; execute step 180.

Step 180: the UE performs other tasks.

The embodiment illustrated in FIG. 2 is similar to the embodiment illustrated in FIG. 1, but is different in the UE behavior after determining that the serving cell is forbidden to be selected in the cell selection procedure or in the cell reselection procedure in step 130. In FIG. 1, an attempt is first made to find a suitable cell before attempting to find an acceptable cell (when no suitable cell can be found). In FIG. 2, the UE only attempts to find an acceptable cell.

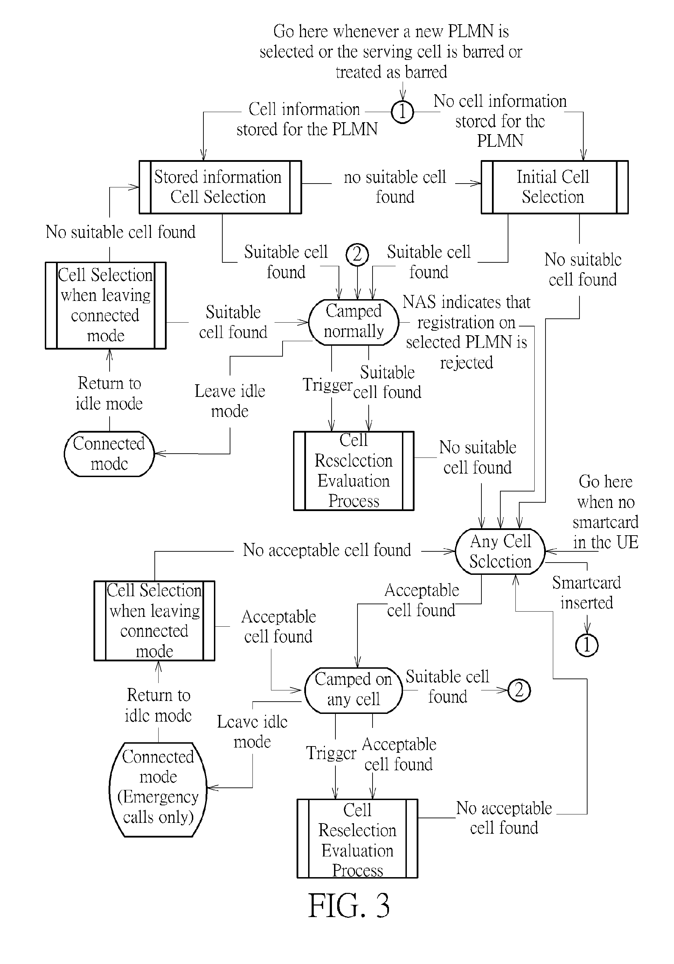

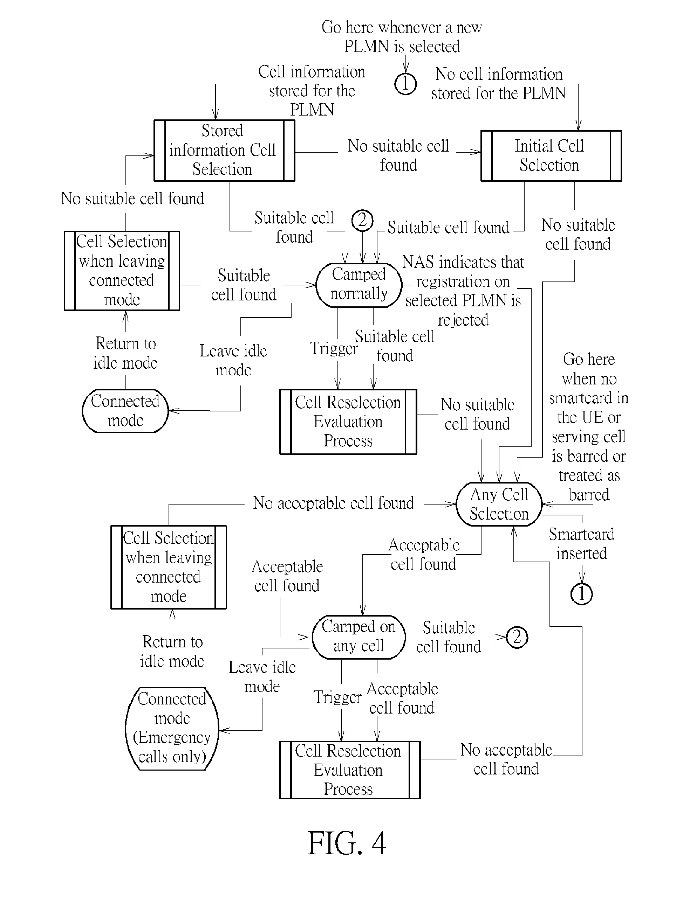

FIGs. 3 and 4 are state diagrams illustrating a method of performing cell selection procedure in a wireless communication system according to another embodiment of the present invention. The state diagram depicted in FIG. 3 corresponds to the method depicted in FIG. 1, wherein the UE enters a "cell selection evaluation state" (either initial cell selection or stored information cell selection) whenever a new PLMN is selected or the serving cell is barred or treated as barred. The state diagram depicted in FIG. 4 corresponds to the method depicted in FIG. 2, wherein the UE enters a "cell selection evaluation state" (any cell selection) when no smartcard is inserted or whenever the serving cell is barred or treated as barred.

After a UE camps on a serving cell, the network may somehow set the serving cell as a barred cell or a reserved cell when the UE is currently camping on the serving cell. In the cell selection method according to the present invention, the UE may attempt to find a suitable cell or an acceptable cell after the current serving becomes barred or treated as barred. Therefore, the present invention can enhance the chance for the UE currently camping on a barred serving cell to handover to another suitable cell or acceptable cell, thereby improving communication quality.

**Claims**

1. A method of performing a cell selection procedure in a wireless communication system which includes a user equipment and a plurality of cells, the method comprising:

the user equipment camping on a specific cell among the plurality of cells; the method **characterized by:**
the user equipment evaluating if the plurality of cells includes a suitable cell when camping on the specific cell if it is determined that the specific cell is forbidden to be selected in the cell selection procedure or in a cell reselection procedure; and
the user equipment camping on the suitable cell if the plurality of cells includes the suitable cell.

2. The method of claim 1, **further characterized by** comprising the further step of:

the user equipment receiving system information from the specific cell when camping on the specific cell; and
the user equipment determining if the specific cell is forbidden to be selected in the cell reselection procedure or in the cell selection procedure according to status information indicated in the system information.

3. The method of claim 2, **characterized in that:**

the system information includes a "cell barred" information element, a "cell reserved for operator use" information element, and a "cell reservation on extension" information element defined in a 3rd Generation Partnership Project (3GPP) specification;
the user equipment determines that the specific cell is forbidden to be selected in the cell reselection procedure or in the cell selection procedure when one of the "cell barred" information element, the "cell reserved for operator use" information element, and the "cell reservation on extension" information element is set in a "barred" state or in a "reserved" state; and
the user equipment determines that the specific cell is allowed to be selected in the cell reselection procedure or in the cell selection procedure when all of the "cell barred" information element, the "cell reserved for operator use" information element, and the "cell reservation on extension" information element are set in a "not barred" state or in a "not reserved" state.

4. The method of any one of claims 1-3, **further characterized by** comprising the further step of:

the user equipment evaluating if the plurality of cells includes an acceptable cell when the plurality of cells does not include the suitable cell; and
the user equipment camping on the acceptable cell if the plurality of cells includes the acceptable cell.

5. A method of performing a cell selection procedure in a wireless communication system which includes a user equipment and a plurality of cells, the method comprising:

the user equipment camping on a specific cell among the plurality of cells; the method **characterized by:**
the user equipment evaluating if the plurality of cells includes an acceptable cell when camping on the specific cell if it is determined that the specific cell is forbidden to be selected in the cell selection procedure or in a cell reselection procedure; and
the user equipment camping on the acceptable cell if the plurality of cells includes the acceptable cell.

6. The method of claim 5, **further characterized by** comprising the further step of:

the user equipment receiving system information from the specific cell when camping on the specific cell; and
the user equipment determining if the specific cell is forbidden to be selected in the cell reselection procedure or in the cell selection procedure according to status information indicated in the system information.

7. The method of claim 6, **characterized in that:**

the system information includes a "cell barred" information element, a "cell reserved for operator use" information element, and a "cell reservation on extension" information element defined in a 3rd Generation Partnership Project (3GPP) specification;
the user equipment determines that the specific cell is forbidden to be selected in the cell reselection procedure or in the cell selection procedure when one of the "cell barred" information element, the "cell reserved for operator use" information element, and the "cell reservation on extension" information element is set in a "barred" state or in a "reserved" state; and
the user equipment determines that the specific cell is allowed to be selected in the cell reselection procedure or in the cell selection procedure when all of the "cell barred" information element, the "cell reserved for operator use" information element, and the "cell reservation on extension" information element are set in a "not barred" state or in a "not reserved" state.

8. A wireless communication system configured to perform a cell selection procedure according to any of claims 1-7.

FIG. 1

UE selects a specific cell from the plurality of cells as a serving cell by performing a cell selection procedure ⌐ 110

UE camps on the serving cell and receives system information from the serving cell ⌐ 120

UE determines if the serving cell is forbidden to be selected in the cell selection/reselection procedure according to the system information? ⌐ 130 — No

Yes

UE evaluates if the plurality of cells includes an acceptable cell? ⌐ 160 — No

Yes

UE camps on the acceptable cell by performing the cell selection procedure ⌐ 170

UE performs other tasks ⌐ 180

# FIG. 2

Go here whenever a new PLMN is
selected or the serving cell is barred or
treated as barred

Cell information ──①── No cell information
stored for the PLMN          stored for the
                                    PLMN

┌──────────────────┐   no suitable cell   ┌──────────────┐
│ Stored information │ ─── found ────→ │ Initial Cell │
│ Cell Selection     │                 │ Selection    │
└──────────────────┘                   └──────────────┘

No suitable cell found

┌──────────┐          Suitable cell  ②  Suitable cell              No suitable
│Cell Selection│                 found        found               cell found
│when leaving  │
│connected     │     Suitable              NAS indicates that
│mode          │     cell found  ──→  ⟨Camped⟩── registration on ──
└──────────┘                      ⟨normally⟩   selected PLMN is
                                                  rejected
Return to                                    Suitable
idle mode          Leave idle    Trigger cell found              Go here
                    mode                                          when no
⟨Connected⟩                                                       smartcard
⟨ mode  ⟩                    ┌──────────┐   No suitable          in the UE
                              │   Cell    │   cell found
                              │Reselection│
                              │Evaluation │
                              │Process    │
                              └──────────┘

         No acceptable cell found ────→  ⟨Any Cell⟩←── Smartcard
                                          ⟨Selection⟩    inserted
┌──────────┐                    Acceptable
│Cell Selection│    Acceptable  cell found            Smartcard
│when leaving  │    cell found                        inserted
│connected     │
│mode          │                                      ──①
└──────────┘
Return to                ⟨Camped on⟩ Suitable cell
idle mode                ⟨any cell ⟩    found ──→②
              Leave idle
⟨Connected⟩    mode
⟨  mode    ⟩           Trigger  Acceptable
⟨(Emergency⟩                    cell found
⟨calls only)⟩          ┌──────────┐
                        │   Cell    │  No acceptable
                        │Reselection│  cell found
                        │Evaluation │
                        │Process    │
                        └──────────┘

## FIG. 3

Go here whenever a new
PLMN is selected

Cell information
stored for the
PLMN
①
No cell information
stored for the PLMN

Stored
information Cell
Selection
No suitable cell
found
Initial Cell
Selection

No suitable cell found

Suitable cell
found
②
Suitable cell found
No suitable
cell found

Cell Selection
when leaving
connected
mode
Suitable
cell found
Camped
normally
NAS indicates that
registration on
selected PLMN is
rejected

Return to
idle mode
Leave idle
mode
Trigger
Suitable cell
found

Connected
mode
Cell Reselection
Evaluation
Process
No suitable
cell found

Go here
when no
smartcard in
the UE or
serving cell
is barred or
treated as
barred

No acceptable cell found
Any Cell
Selection

Cell Selection
when leaving
connected
mode
Acceptable
cell found
Acceptable
cell found
Smartcard
inserted

Return to
idle mode
①

Camped on
any cell
Suitable
cell found
②

Leave idle
mode

Connected
mode
(Emergency
calls only)
Trigger
Acceptable
cell found

Cell Reselection
Evaluation
Process
No acceptable
cell found

FIG. 4

Europäisches
Patentamt

European
Patent Office

Office européen
des brevets

# EUROPEAN SEARCH REPORT

Application Number

EP 15 16 8618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | "3rd Generation Partnership Project; Technical Specification Group Radio Access Network; Evolved Universal Terrestrial Radio Access (E-UTRA); User Equipment (UE) procedures in idle mode (Release 10)", 3GPP DRAFT; 36304-A80, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 16 March 2014 (2014-03-16), XP050905168, Retrieved from the Internet: URL:http://www.3gpp.org/ftp/Specs/2014-12/Rel-10/36_series [retrieved on 2014-03-16] * the whole document * | 1-8 | INV. H04W48/20 ADD. H04W48/02 |
| X | US 2005/079870 A1 (RICK ROLAND [US] ET AL) 14 April 2005 (2005-04-14) * the whole document * | 1,8 | |
| X | "Digital cellular telecommunications system (Phase 2+); Functions related to Mobile Station (MS) in idle mode and group receive mode (GSM 03.22 version 8.3.0 Release 1999)", 3GPP STANDARD; ETSI TS 100 930, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.3.0, 1 April 2000 (2000-04-01), pages 1-22, XP050357832, * paragraph [3.2.2]; figure 3 * | 4 | **TECHNICAL FIELDS SEARCHED (IPC)** H04W |

-/--

The present search report has been drawn up for all claims

| Place of search | Date of completion of the search | Examiner |
|---|---|---|
| Munich | 5 January 2016 | Tessier, Serge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 15 16 8618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/157713 A1 (QUALCOMM INC [US]; KITAZOE MASATO [US]) 24 December 2008 (2008-12-24) * paragraphs [[0013]], [[0019]], [[0006]], [[0074]]; figures 2, 9 * * paragraph [[0011]] * * figure 4 * ----- | 1,2 | |
| T | "3rd Generation Partnership Project; Technical Specification Group Radio Access Network; User Equipment (UE) procedures in idle mode and procedures for cell reselection in connected mode (Release 12)", 3GPP DRAFT; 25304-C50, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 18 March 2015 (2015-03-18), XP050952058, Retrieved from the Internet: URL:http://www.3gpp.org/ftp/tsg_ran/WG2_RL 2/Specifications/201503_final_specs_after_ RAN_67/ [retrieved on 2015-03-18] ----- | | |
| X | EP 2 200 374 A1 (HTC CORP [TW]) 23 June 2010 (2010-06-23) * paragraph [0026]; figure 4 * ----- | 1-8 | |

| | | |
|---|---|---|
| | | TECHNICAL FIELDS SEARCHED (IPC) |

The present search report has been drawn up for all claims

| Place of search | Date of completion of the search | Examiner |
|---|---|---|
| Munich | 5 January 2016 | Tessier, Serge |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 .................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**    EP 15 16 8618

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2016

| Patent document cited in search report | | Publication date | Patent family member(s) | | Publication date |
|---|---|---|---|---|---|
| US 2005079870 | A1 | 14-04-2005 | CN | 1883221 A | 20-12-2006 |
| | | | HK | 1095471 A1 | 12-02-2010 |
| | | | MX | PA06003970 A | 27-06-2006 |
| | | | TW | I358212 B | 11-02-2012 |
| | | | US | 2005079870 A1 | 14-04-2005 |
| | | | WO | 2005039230 A1 | 28-04-2005 |
| WO 2008157713 | A1 | 24-12-2008 | AU | 2008265708 A1 | 24-12-2008 |
| | | | BR | PI0813472 A2 | 25-08-2015 |
| | | | CA | 2687984 A1 | 24-12-2008 |
| | | | CN | 101690345 A | 31-03-2010 |
| | | | EP | 2172036 A1 | 07-04-2010 |
| | | | JP | 5335783 B2 | 06-11-2013 |
| | | | JP | 2010531578 A | 24-09-2010 |
| | | | KR | 20100032433 A | 25-03-2010 |
| | | | RU | 2010101420 A | 27-07-2011 |
| | | | TW | 200917861 A | 16-04-2009 |
| | | | US | 2009067386 A1 | 12-03-2009 |
| | | | WO | 2008157713 A1 | 24-12-2008 |
| EP 2200374 | A1 | 23-06-2010 | CN | 101765171 A | 30-06-2010 |
| | | | DE | 202009018266 U1 | 26-08-2011 |
| | | | EP | 2200374 A1 | 23-06-2010 |
| | | | TW | 201026112 A | 01-07-2010 |
| | | | US | 2010159928 A1 | 24-06-2010 |

EPO FORM P0459

For more details about this annex : see Official Journal of the European Patent Office, No. 12/82